# EUROPÄISCHE PATENTSCHRIFT

(11) **EP 4 001 225 B1**
(45) Veröffentlichungstag und Bekanntmachung des Hinweises auf die Patenterteilung: **18.06.2025**
(21) Anmeldenummer: 21206717.7
(22) Anmeldetag: 05.11.2021
(51) Int. Cl.: C02F 11/16, F26B 3/22, F26B 17/00, F26B 25/04, F26B 25/00

(54) **VORRICHTUNG UND KOMPAKTANLAGE ZUM TROCKNEN, INSBESONDERE VON BIOMASSE**
DEVICE AND COMPACT PLANT FOR DRYING, IN PARTICULAR BIOMASS
DISPOSITIF ET INSTALLATION COMPACTE DE SÉCHAGE, EN PARTICULIER DE LA BIOMASSE

(30) Priorität: 17.11.2020 DE 102020130299
(43) Veröffentlichungstag der Anmeldung: 25.05.2022
(73) Patentinhaber: Boehm Dryrun GmbH, 98544 Zella-Mehlis (DE)
(72) Erfinder: Hellmuth, Felix, 96450 Coburg (DE)
(74) Vertreter: 2s-ip Schramm Schneider Bertagnoll Patent- und Rechtsanwälte Part mbB

(56) Entgegenhaltungen:
- DE-A1- 19 836 268
- DE-A1- 2 937 644
- DE-B1- 1 604 862
- DE-U1- 202019 101 557

## Beschreibung

Die Erfindung betrifft eine Vorrichtung zum Trocknen von Material, insbesondere zum Trocknen von befeuchteter oder Feuchtigkeit enthaltender Masse oder Schlamm oder von befeuchteten oder Feuchtigkeit enthaltenden Teilen oder Granulaten, wie etwa Metallspänen oder Hackschnitzeln. Die Erfindung betrifft insbesondere eine Vorrichtung zum Trocknen von Biomasse, wie etwa Klärschlamm, Milchschlamm, Biertreber, Gärresten, Gülle, Tiergülle oder Biogasgülle. Die Erfindung betrifft ferner eine Kompaktanlage mit einer oder mehreren solcher Vorrichtungen zum Trocknen.

Zur Trocknung von Klärschlamm ist es bekannt, diesen in einer Ebene auf einer Trocknungsfläche möglichst gleichmäßig zu verteilen und anschließend insbesondere unter dem Einfluss von Sonnenstrahlung zu trocknen. Hierbei kann es sich insbesondere als hilfreich erweisen, die Biomasse schichtartig auf die Trocknungsfläche zubringen. Der Trocknungsvorgang erfolgt typischerweise in hierzu geeigneten Gebäuden, die insbesondere hallenartig oder nach Art von Gewächshäusern ausgebildet und entsprechend groß dimensioniert sind. Die Trocknungsfläche bei bekannten Anlagen können insbesondere Längen von mehr als 100 Meter aufweisen.

Aus dem Stand der Technik sind verschiedene Vorrichtungen bekannt, die dazu ausgebildet sind, Biomasse, insbesondere Klärschlamm, in einer Ebene auf einer Trocknungsfläche auszubringen. DE 103 11 554 B4 beschreibt beispielsweise eine Vorrichtung mit einem Kratzenförderer, dessen Kratzer in definiertem Abstand zur Trocknungsfläche geführt werden, um Klärschlamm in definierter Schichtdicke auf dieser zu verteilen. Zur Unterstützung des Trocknungsvorgangs unter Einfluss von Sonnenstrahlung kann die Trocknungsfläche zusätzlich beheizbar sein. Eine weitere Trocknungsvorrichtung ist aus DE1604862 bekannt.

Der Erfindung liegt die Aufgabe zugrunde, eine neue Vorrichtung zum Trocknen von Material, insbesondere von Biomasse, beispielsweise von Klärschlamm anzugeben, bei der insbesondere eine gute Durchmischung des auf der Trocknungsfläche aufgebrachten Materials, insbesondere der Biomasse, sichergestellt ist.

Diese Aufgabe wird gelöst durch eine Vorrichtung mit den Merkmalen des Anspruchs 1. Vorteilhafte Ausgestaltungen und Weiterbildungen sind in den abhängigen Ansprüchen angegeben.

Die erfindungsgemäße Vorrichtung zum Trocken ist insbesondere zum Trocknen von Materialien wie beispielsweise befeuchteter oder Feuchtigkeit enthaltender Masse oder Schlamm oder befeuchteten oder Feuchtigkeit enthaltenden Teilen oder Granulaten, wie etwa Metallspänen oder Hackschnitzeln, oder Biomasse, wie etwa Klärschlamm, Milchschlamm, Biertreber, Gärresten, Gülle, Tiergülle oder Biogasgülle ausgebildet. Die erfindungsgemäße Vorrichtung zum Trocken umfasst zumindest einer Trocknungsfläche (auch: Trockenfläche, Trocknungsebene), auf die Feuchtigkeit enthaltendes Material, insbesondere Biomasse, zum Trocknen flächig ausbringbar ist. Zum Ausbringen und/oder Fördern des Materials, insbesondere der Biomasse, sind von zumindest einem Zugmittel bewegbare oder bewegte Förderelemente vorgesehen, welche zumindest mittelbar, beispielsweise über zumindest einen dazwischen angeordneten Träger, an dem zumindest einen Zugmittel befestigt sind und von diesem in Förderrichtung bewegbar sind.

Gemäß der Erfindung sind die Förderelemente zum Durchmischen des Materials auf der zumindest einen Trocknungsfläche bezüglich des zumindest einen Zugmittels um zumindest eine senkrecht zur Förderrichtung verlaufende Drehachse drehbar gelagert.

Die Formulierung, dass die Förderelemente bezüglich des zumindest einen Zugmittels um zumindest eine senkrecht zur Förderrichtung verlaufende Drehachse drehbar gelagert sind, soll insbesondere derart verstanden werden, dass alle Förderelemente an einem Zugmittel oder eine Mehrzahl der Förderelemente an einem Zugmittel um eine gemeinsame Drehachse drehbar sind oder dass einzelne Förderelemente, in Ausgestaltungen alle Förderelemente der jeweiligen Vorrichtung, um Drehachsen drehbar sind, die dem jeweiligen Förderelement individuell zugeordnet sind. Unter einer drehbaren Lagerung wird in Ausgestaltungen insbesondere eine solche Lagerung verstanden, die eine Rotation des jeweiligen Förderelements um die jeweilige Drehachse über einen Winkelbereich von 360°, also insbesondere ein fortwährendes Rotieren der Förderelemente, ermöglicht.

Die Förderelemente wirken zum Verteilen und Durchmischen des Materials auf die zumindest eine Trocknungsfläche. Unter der Formulierung, dass die Förderelemente auf oder in Richtung der Trocknungsfläche wirken, soll insbesondere jeder mechanische Eingriff zu verstehen sein, der dazu geeignet ist, das zu trocknende Material, insbesondere die zu trocknende Biomasse, auf der jeweiligen Trocknungsfläche zu verteilen und/oder gegebenenfalls auf der jeweiligen Trocknungsfläche zu durchmischen.

Begriffe wie "oben", "unten", "vertikal" oder "horizontal" sollen im Rahmen dieser Spezifikation im herkömmlichen Sinne mit Bezug auf das Schwerefeld der Erde verstanden werden. Die Trocknungsfläche erstreckt sich typischerweise im Wesentlichen in einer horizontalen Ebene. In Ausgestaltungen sind mehrere Trocknungsflächen, beispielsweise zumindest eine obere und eine untere Trocknungsfläche vorgesehen, die in vorteilhaften Ausführungsbeispielen übereinander und zumindest abschnittsweise überlagernd angeordnet sind. In Ausgestaltungen erstrecken sich die obere und die untere Trocknungsfläche im Wesentlichen über zueinander in vertikaler Richtung beabstandete horizontale Ebenen, die nicht notwendiger Weise gleiche Ausdehnungen aufweisen und zueinander versetzt angeordnet sein können. In anderen Ausgestaltungen können die obere und/oder untere Trocknungsfläche bezüglich einer horizontalen Ebene beispielsweise leicht geneigt angeordnet sein.

Die von dem zumindest einen Zugmittel bewegbaren bzw. bewegten Förderelemente sind strukturell so ausgebildet, dass diese zum Verteilen und gegebenenfalls. Durchlüften des Materials auf der zumindest einen Trocknungsfläche geeignet sind. Hierzu sind prinzipiell unterschiedliche strukturelle Ausbildungen der Förderelemente möglich. Insbesondere können die Förderelemente beispielsweise als Paddel, Harken, Rechen, Zinken, Haken, Wendehaken oder Scharen, insbesondere Pflugscharen oder Gänsefußscharen ausgebildet sein. Die Förderelemente sind in Ausgestaltungen beispielsweise als Wendehaken ausgebildet und können insbesondere jeweils zumindest einen Wendeabschnitt zum Verteilen der Biomasse auf den Trocknungsflächen aufweisen.

Die Förderelemente sind zumindest mittelbar an dem zumindest einen Zugmittel befestigt. Unter einer mittelbaren Befestigung der Förderelemente am Zugmittel soll insbesondere eine Befestigung verstanden werden, bei der zwischen dem Zugmittel und den Förderelementen ein Befestigungsteil, wie etwa ein Träger bzw. ein Querträger, der mehrere Förderelemente trägt, angeordnet ist. Ein derartiger Querträger mit mehreren Förderelementen kann beispielsweise als Mitnehmerrechen ausgebildet sein.

Im Kern wird vorgeschlagen, die Förderelemente bei der Bewegung über die zumindest eine Trocknungsfläche in Förderrichtung in Rotation zu versetzen, um die Durchmischung des zu trocknenden Guts zu verbessern. Die Förderelemente werden im Trocknungsbetrieb der Vorrichtung somit insbesondere nicht gleichförmig über die zumindest eine Trocknungsfläche geführt.

In Ausgestaltungen ist die zumindest eine Trocknungsfläche, insbesondere mittels einer Heizeinrichtung, zumindest abschnittsweise, vorzugsweise vollständig beheizbar. Die Heizeinrichtung ist beispielsweise ähnlich einer Fußbodenheizung ausgebildet und kann in vorteilhaften Ausführungen zumindest zum Teil, insbesondere vollständig in der Trocknungsfläche integriert sein.

In möglichen Ausführungsbeispielen ist die zumindest eine Trocknungsfläche durch eine Platten aus Metall, insbesondere aus Edelstahl realisiert.

In Ausgestaltungen ist das zumindest eine Zugmittel ein endloses Zugmittel, insbesondere ein umlaufendes Zugmittel, beispielsweise ein umlaufendes Seil, ein umlaufendes Band, ein umlaufender Gurt oder eine umlaufende Kette. Die Zugmittel sind vorzugsweise von gängigen Antrieben, wie etwa Elektromotoren angetrieben.

Zumindest einige der Förderelemente sind über zumindest einen Träger an dem zumindest einen Zugmittel befestigt. Die Förderelemente sind von dem Zugmittel in Förderrichtung bewegbar. Der zumindest eine Träger kann sich quer zur Förderrichtung erstrecken und/oder an jedem Träger können typischerweise mehrere Förderelemente befestigt sein.

In vorteilhaften Ausgestaltungen ist insbesondere vorgesehen, die Förderelemente und/oder Träger aus Gründen der mechanischen Stabilität an mehreren Zugmitteln aufzuhängen bzw. zu befestigen. Jeder Träger ist in vorteilhaften Ausgestaltungen dazu ausgebildet, mehrere Förderelemente zu tragen, die zueinander in lateraler Richtung quer zur Förderrichtung beabstandet sind. Die zueinander in lateraler Richtung quer zur Förderrichtung beabstandete Förderelemente können insbesondere zueinander regelmäßig oder unregelmäßig beabstandet sein. Der Abstand der Förderelemente zueinander ist insbesondere so gewählt, dass diese sich im Betrieb frei um ihre jeweils zugeordneten Drehachsen bewegen können.

Durch die Dimensionierung der Träger und eine entsprechende Anpassung der Anzahl der Förderelemente, die jeder Träger trägt, können insbesondere Vorrichtungen angegeben werden, die dazu ausgebildet sind, Material, insbesondere Biomasse, auf Trocknungsflächen unterschiedlicher Größe gleichmäßig auszubringen.

Der zumindest eine Träger ist in einer horizontalen Ebene angeordnet.

In Ausgestaltungen sind die Förderelemente an dem zumindest einen Träger drehbar um senkrecht zur Förderrichtung verlaufende Drehachsen gelagert.

Alternativ dazu (nicht beansprucht) weist der zumindest eine Träger eine Längsachse auf, die sich quer zur Förderrichtung erstreckt und um die der zumindest eine Träger drehbar gelagert ist. In derartigen Ausgestaltungen rotieren die an dem Träger befestigten Förderelemente mit diesem um dessen Längsachse.

In Weiterbildung von Ausführungsbeispielen mit zumindest einem um seine Längsachse drehbar gelagerten Träger ist vorgesehen, die Förderelemente drehfest an dem zumindest einen Träger zu befestigen (nicht beansprucht).

Erfindungsgemäß sind die Förderelemente bezüglich des zumindest einen Zugmittels derart exzentrisch um vertikale Drehachsen drehbar gelagert, dass die Förderelemente bei der Förderbewegung über die, sich beispielsweise in einer horizontalen Ebene erstreckende, Trocknungsfläche entlang zyklischen Kurven (auch: Zykloid, Abrollkurve) geführt werden. Die Förderelemente werden somit nicht entlang linearen Trajektorien über die Trocknungsfläche geführt, sondern beschreiben gekrümmte Bahnen, um die Durchmischung des zu trocknenden Guts sicherzustellen.

Erfindungsgemäß ist zumindest eines der Förderelemente über ein Getriebe an einem bezüglich der Förderrichtung stationär verankerten Koppelelement derart angekoppelt, dass das zumindest eine Förderelement durch Bewegung des zumindest einen Zugmittels, also durch Vermittlung einer längs des zumindest einen Zugmittels wirkenden Kraft, in eine Drehbewegung versetzbar ist. Auf diese Weise können die Förderelemente mittels des zumindest einen Zugmittels sowohl in Förderrichtung bewegt als auch um die jeweilig zugeordnete Drehachse oder Drehachsen rotiert werden. Ein separater Antrieb für die Drehbewegung kann so vermieden werden. Dies bedeutet im Ergebnis eine konstruktive Vereinfachung, da insbesondere das aufwändige Verlegen von Strom- und/oder Druckluftleitungen zu den mitbewegten Förderelementen vermieden werden kann.

Erfindungsgemäß ist das Getriebe als Zahnradgetriebe ausgebildet. Das Getriebe umfasst beispielsweise zumindest ein Zahnrad, welches in das stationäre Koppelelement eingreift. Das Zahnrad ist drehfest mit dem Träger verbunden sein, so dass der Träger und damit die daran befestigten Förderelemente mit dem Zahnrad rotieren.

In Ausgestaltungen umfasst das Koppelelement eine sich zumindest abschnittsweise längs der Förderrichtung erstreckende Kette oder Zahnschiene oder Zahnstange.

In Ausgestaltungen ist das Koppelelement, insbesondere die Kette oder Zahnschiene oder Zahnstange, im Raum, insbesondere bezüglich der zumindest einen Trocknungsfläche, feststehend angeordnet.

Die erfindungsgemäße Kompaktanlage zum Trocken von Material, insbesondere zum Trocknen von Hackschnitzeln, Metallspänen oder von Biomasse, wie etwa Klärschlamm, Milchschlamm, Biertreber, Gärresten, Gülle, Tiergülle, Biogasgülle oder dergleichen, umfasst zumindest eine der vorstehend beschriebenen Vorrichtungen. In vorteilhaften Ausgestaltungen sind mehrere der vorstehend beschriebenen Vorrichtungen in einer Kompaktanlage vorgesehen. Eine solche Kompaktanlage umfasst in derartigen Ausgestaltungen zumindest zwei, bevorzugt zumindest drei, besonderes bevorzugt vier derartige Vorrichtungen. Die Vorrichtungen sind in vorteilhaften Ausgestaltungen in vertikaler Richtung übereinander angeordnet, insbesondere derart, dass zu trocknendes Material kaskadenähnlich über die übereinander angeordneten Trocknungsflächen der einzelnen Vorrichtungen verteilt werden kann. Die Kompaktanlage mit den auf mehreren Ebenen angeordneten Vorrichtungen ermöglicht entsprechend eine Trocknung des mit Hilfe der Vorrichtungen geförderten Materials auf mehreren Trocknungsflächen bzw. -ebenen, die zueinander in vertikaler Richtung beabstandet angeordnet sind. Auf diese Weise kann insbesondere in vertikaler Richtung zu Verfügung stehender Bauraum besser ausgenutzt werden.

In Ausgestaltungen sind die Vorrichtungen derart in vertikaler Richtung übereinander angeordnet, dass sich die übereinander angeordneten Trocknungsflächen der Vorrichtungen zumindest abschnittsweise überlagern. In konkreten Ausgestaltungen sind die Trocknungsflächen der übereinander angeordneten Vorrichtungen derart überlagernd angeordnet, dass diese sich zumindest zum Großteil, beispielsweise zu mehr als 80% überlagern, um eine bessere Raumnutzung sicherzustellen. Die überlagernde Anordnung soll insbesondere bezüglich des Flächenbedarfs der jeweiligen Trocknungsfläche hinsichtlich einer senkrechten Projektion auf eine horizontale Ebene verstanden werden.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Es zeigen
- FIG 1: eine erfindungsgemäße Kompaktanlage mit zwei übereinander angeordneten erfindungsgemäßen Vorrichtungen zum Trocken von Material, insbesondere von Biomasse, in einer Querschnittsdarstellung;
- FIG 2: eine nicht beanspruchte Vorrichtung zum Trocknen von Material, insbesondere von Biomasse, in einer schematischen Seitenansicht;
- FIG 3: eine erfindungsgemäße Vorrichtung zum Trocknen von Material, insbesondere von Biomasse, gemäß einem Ausführungsbeispiel in einer schematischen Draufansicht.

Einander entsprechende Teile und Komponenten sind in allen Figuren mit den gleichen Bezugszeichen versehen.

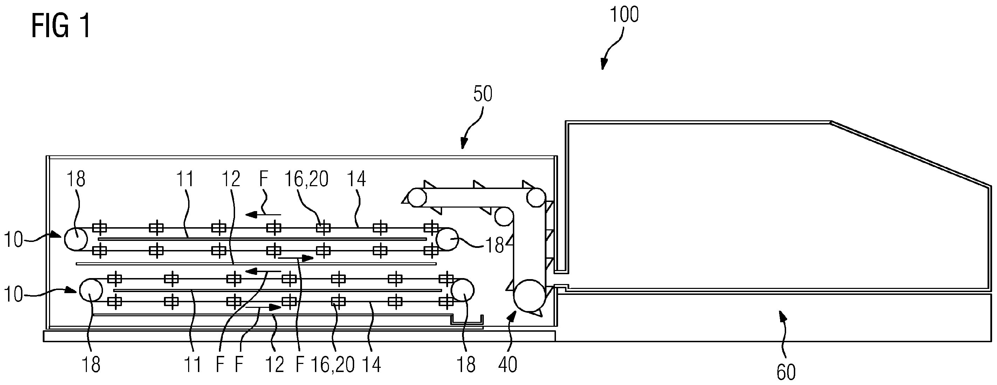

FIG 1 zeigt eine Gebäudeeinheit 100, in der eine Kompaktanlage 50 installiert ist, die zwei übereinander angeordnete Vorrichtungen 10 zum Trocken von Material, insbesondere zum Trockenen von Biomasse, wie etwa Klärschlamm, und optional einen Höhenförderer 40 umfasst. Die nachfolgende Beschreibung nimmt explizit Bezug auf die Trocknung von Biomasse. Es versteht sich, dass die Vorrichtung 10 bzw. die Kompaktanlage 50 nicht auf die Trocknung von Biomasse beschränkt ist. Die Vorrichtung 10 bzw. die Kompaktanlage 50 ist beispielsweise gleichermaßen dazu geeignet, anorganisches Material, wie etwa Metallspäne, oder Schüttgut, wie etwa Hackschnitzel oder dergleichen, zu trocknen.

Jede Vorrichtung 10 weist zumindest eine Trocknungsfläche 11, 12 auf. In dem exemplarisch gezeigten und nicht einschränkend aufzufassenden Ausführungsbeispiel weist jede Vorrichtung 10 eine oberen Trocknungsfläche 11 und eine untere Trocknungsfläche 12 auf, die in vertikaler Richtung voneinander beabstandet sind. Die oberen und unteren Trocknungsflächen 11, 12 sind im dargestellten Ausführungsbeispiel als beheizbare Platten beispielsweise aus Edelstahl ausgebildet. Auf die Trocknungsflächen 11, 12 ist Biomasse zum Trocknen flächig ausbringbar, die der Höhenförderer 40 im Betrieb von einem Lager 60 auf die obere Trocknungsfläche 11 der oberen Vorrichtung 10 fördert. Die Vorrichtungen 10 sind dazu ausgebildet, die geförderte Biomasse auf den Trocknungsflächen 11, 12 zu verteilen und gegebenenfalls zu durchmischen. Hierzu weist jede Vorrichtung 10 Zugmittel 14, beispielsweise eine umlaufende Kette oder ein umlaufendes Seil, auf, an denen Förderelemente 16 mittelbar oder unmittelbar befestigt sind.

Die Trocknungsflächen 11, 12 der Kompaktanlage 50 bilden eine Trocknungsstrecke für das zu trocknende Material und sind vorzugsweise zumindest abschnittsweise beheizbar. Optional ist in nicht näher dargestellter Weise eine Zerkleinerungseinrichtung, beispielsweise ein Häcksler, am Eingang der Trocknungsstrecke, beispielsweise im Bereich des Höhenförderers 40 oder vor dem Höhenförderer 40, zum Zerkleinern des zugeführten, feuchten Materials angeordnet. Alternativ oder zusätzlich ist eine Zerkleinerungseinrichtung, beispielsweise ein Schneidrechen, zum Zerkleinern des getrockneten Materials ausgangsseitig an der Trocknungsstrecke, also am Ende der untersten Trocknungsfläche 12 der Figur 1 angeordnet.

In anderen Ausgestaltungen umfasst die Kompaktanlage 50 lediglich eine Vorrichtung 10. Es können insbesondere auch Vorrichtungen 10 mit nur einer einzelnen Trocknungsfläche 11 vorgesehen sein.

Die Zugmittel 14 sind im exemplarisch dargestellten Ausführungsbeispiel umlaufend um die obere Trocknungsfläche 11 der jeweiligen Vorrichtung 10 angeordnet und können von motorisch angetriebenen Antriebsmittel 18, beispielsweise von motorisch angetriebenen Rollen oder Walzen, in eine umlaufende Bewegung versetzt werden.

Im Förderbetrieb der Vorrichtung 10 werden die Förderelemente 16 von den Zugmittel 14 über die Trocknungsflächen 11, 12 in Förderrichtung F bewegt. Da die Zugmittel 14 einer jeden Vorrichtung 10 umlaufend um die jeweilige obere Trocknungsfläche 11 (auch: Trocknungsebene) angeordnet sind, kann mit Hilfe der daran mittelbar oder unmittelbar befestigten Förderelementen 16 Biomasse sowohl über die obere Trocknungsfläche 11 als auch über die untere Trocknungsfläche 12 gefördert werden.

Die Förderelemente 16 sind strukturell derart ausgebildet, dass diese im Förderbetrieb auf die Biomasse auf der jeweiligen Trocknungsfläche 11, 12 einwirken und diese insbesondere ausbringen und/oder fördern und/oder durchmischen. Die Förderelemente 16 sind bezüglich des Zugmittels 14 drehbar gelagert, so dass diese im Förderbetrieb zusätzlich um senkrecht zur Förderrichtung F verlaufende Drehachsen rotieren.

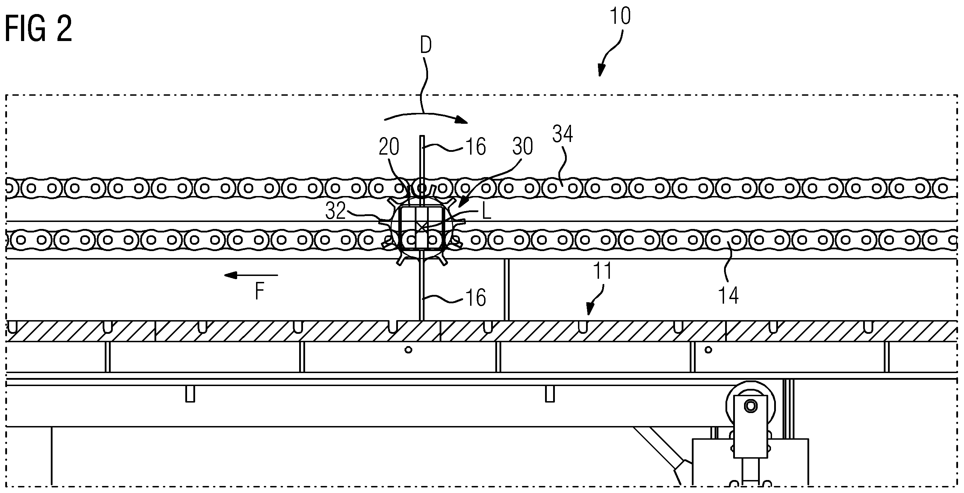

FIG 2 zeigt ein nicht beanspruchtes Beispiel der Vorrichtung 10 zum Trocknen von Material, insbesondere Biomasse, in einer schematischen Seitenansicht. Die Förderelemente 16 sind mittelbar über Träger 20, die sich quer zur Förderrichtung F und senkrecht zur Zeichenebene erstrecken, an dem Zugmittel 14 befestigt. Die Träger 20 sind um ihre sich senkrecht zur Zeichenebene der FIG. 2 erstreckende Längsachsen L drehbar gelagert. Die Förderelemente 16 sind als Zinken ausgebildet und im gezeigten Ausführungsbeispiel an gegenüberliegenden Seiten des Trägers 20 angeordnet und an diesem drehfest befestigt. Im Förderbetrieb rotieren somit die Förderelemente 16 zusammen mit dem Träger 20 in der Art eines rotierenden Mitnehmerrechens.

Das Zugmittel 14 ist im dargestellten Beispiel als Kette ausgeführt. Die Träger 20 sind an dem Zugmittel 14 befestigt und werden von diesem im Förder- bzw. Trocknungsbetrieb in Förderrichtung F über die Trocknungsflächen 11, 12 bewegt. Jeder Träger 20 ist über ein Getriebe 30 an einem stationär verankerten Koppelelement 34 angekoppelt, welches im dargestellten Ausführungsbeispiel als Kette ausgeführt ist, in das ein mit dem Träger 20 drehfest verbundenes Zahnrad 32 eingreift. Da das Koppelelement 34 bezüglich der Trocknungsfläche 11 stationär befestigt ist, bewegt sich dieses im Bezugssystem der mitbewegten Träger 20 entgegen der Förderrichtung F. Der Eingriff des mitbewegten Zahnrads 32 in das stationäre Koppelelement 34 vermittelt daher ein um die Längsachse L des Trägers 20 wirkendes Drehmoment, so dass der Träger 20 im Förderbetrieb in eine Drehbewegung mit Drehrichtung D versetzt wird. Der Drehsinn der Drehbewegung um die Längsachse L kann in Ausgestaltungen insbesondere durch die Lage des Koppelelements 34 bezüglich der Dreh- bzw. Längsachse L konstruktiv angepasst werden, so dass gleichermaßen Ausgestaltungen möglich sind, bei denen die Förderelemente 16 über die Trocknungsfläche 11 in oder entgegen der Förderrichtung F rotieren.

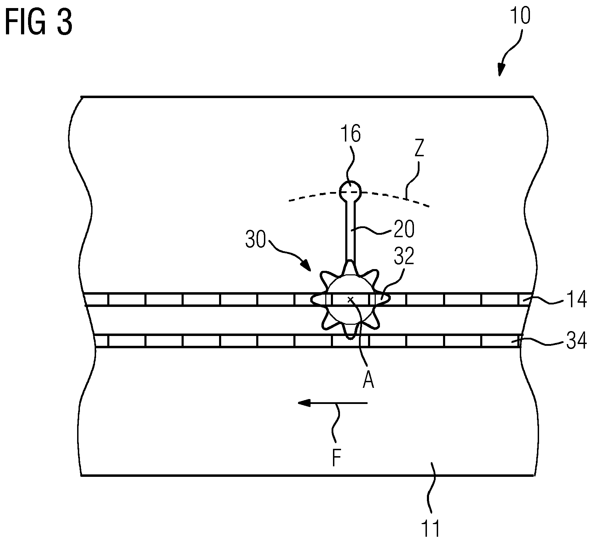

FIG 3 zeigt ein Ausführungsbeispiel der Vorrichtung 10 in einer Draufsicht.

Die Blickrichtung erfolgt dabei in vertikaler Richtung auf die Trocknungsfläche 11. Die Wirkungsweise ist ähnlich wie bei dem Beispiel der FIG. 2, jedoch ist das am Zugmittel 14 befestigte Zahnrad 32 in einer horizontalen Ebene angeordnet und das Förderelement 16 endseitig an einem Träger 20 befestigt, der sich nicht über die gesamte Breite der darunterliegenden Trocknungsfläche 11 erstreckt. Das Zahnrad 32 greift - wie im dem Ausführungsbeispiel der FIG. 2 - in das Koppelelement 34 ein, so dass durch die Förderbewegung in Förderrichtung F ein um die vertikale Drehachse A wirkendes Drehmoment erzeugt wird. Im Förder- bzw. Trocknungsbetrieb rotiert daher der Träger 20 mit dem daran endseitig befestigten Förderelement 16 um die Drehachse A. Da das Förderelement 16 bezüglich der Drehachse A exzentrisch angeordnet ist, beschreibt das Förderelement 16 durch die

Überlagerung mit der Förderbewegung auf der Trocknungsfläche F eine zyklische Kurve Z, die in FIG. 3 gestrichelt angedeutet ist.

### Bezugszeichenliste

- 10: Vorrichtung
- 11: obere Trocknungsfläche
- 12: untere Trocknungsfläche
- 14: Zugmittel
- 16: Förderelement
- 18: Antriebsmittel
- 20: Träger

- 30: Getriebe
- 32: Zahnrad
- 34: Koppelelement

- 40: Höhenförderer
- 50: Kompaktanlage
- 60: Lager
- 100: Gebäudeeinheit

- F: Förderrichtung
- L: Längsachse
- D: Drehrichtung
- A: Drehachse
- Z: zyklische Kurve (Trajektorie)

## Patentansprüche

1. Vorrichtung (10) zum Trocken, insbesondere zum Trocknen von Biomasse, mit zumindest einer Trocknungsfläche (11, 12), auf die Material, insbesondere Biomasse, zum Trocknen flächig ausbringbar ist, wobei zum Ausbringen und/oder Fördern des Materials, insbesondere der Biomasse, von zumindest einem Zugmittel (14) bewegbare oder bewegte Förderelemente (16) vorgesehen sind, welche zumindest mittelbar über zumindest einen Träger (20) an dem zumindest einen Zugmittel (14) befestigt sind und von diesem in Förderrichtung bewegbar sind, wobei die Förderelemente (16) zum Durchmischen des Materials auf der zumindest einen Trocknungsfläche (11, 12) bezüglich des zumindest einen Zugmittels (14) derart exzentrisch um zumindest eine senkrecht zur Förderrichtung (F) verlaufende Drehachse (A) drehbar gelagert sind, dass die Förderelemente (16) bei der Förderbewegung über die Trocknungsfläche (11, 12) entlang zyklischen Kurven (Z) geführt werden,
wobei zumindest eines der Förderelemente (16) über ein Getriebe (30) an einem bezüglich der Förderrichtung (F) stationär verankerten Koppelelement (34) derart angekoppelt ist, dass das zumindest eine Förderelement (16) durch Bewegung des zumindest einen Zugmittels (14) in eine Drehbewegung versetzbar ist,
wobei das Getriebe als Zahnradgetriebe ausgebildet ist,
wobei das Getriebe zumindest ein Zahnrad (32) umfasst, welches in das stationäre Koppelelement (34) eingreift,
wobei das Zahnrad (32) drehfest mit dem Träger (20) verbunden ist, und
wobei das Zahnrad (32) am Zugmittel (14) befestigt ist und in einer horizontalen Ebene abgeordnet ist.

2. Vorrichtung (10) nach Anspruch 1, **dadurch gekennzeichnet, dass** der zumindest eine Träger (20) in einer horizontalen Ebene angeordnet ist.

3. Vorrichtung (10) nach Anspruch 1, **dadurch gekennzeichnet, dass** das Koppelelement (34) eine sich zumindest abschnittsweise längs in Förderrichtung (F) erstreckende Kette oder Zahnschiene oder Zahnstange umfasst.

4. Vorrichtung (10) nach Anspruch 3, **dadurch gekennzeichnet,**
**dass** das Koppelelement (34), insbesondere die Kette oder Zahnschiene oder Zahnstange, im Raum, insbesondere bezüglich der zumindest einen Trocknungsfläche (11, 12), feststehend angeordnet ist.

5. Kompaktanlage (50) zum Trocken, insbesondere von Biomasse, **gekennzeichnet durch** zumindest eine Vorrichtung (10) nach einem der vorhergehenden Ansprüche.

6. Kompaktanlage (50) nach Anspruch 5, **gekennzeichnet durch** zumindest zwei Vorrichtungen (10), bevorzugt zumindest drei Vorrichtungen (10), besonderes bevorzugt vier Vorrichtungen (10) nach einem der Ansprüche 1 bis 4, wobei die Vorrichtungen (10) in vertikaler Richtung übereinander angeordnet sind.

7. Kompaktanlage (50) nach Anspruch 6, **dadurch gekennzeichnet, dass** die Vorrichtungen (10), derart in vertikaler Richtung übereinander angeordnet sind, dass sich die übereinander angeordneten Trocknungsflächen (11, 12) der Vorrichtungen (10) zumindest abschnittsweise überlagern.

## Claims

1. Device (10) for drying, in particular for drying biomass, comprising at least one drying surface (11, 12) onto which material, in particular biomass, can be spread in a planar manner for drying, wherein for spreading and/or conveying the material, in particular the biomass, conveying elements (16) are provided which can be or are moved by at least one traction means (14), which are attached at least indirectly to the at least one traction means (14) via at least one support (20), and which can be moved by said traction means in the conveying direction, wherein the conveying elements (16), for mixing the material on the at least one drying surface (11, 12), are mounted eccentrically with respect to the at least one traction means (14) so as to be rotatable about at least one rotation axis (A) extending perpendicularly to the conveying direction (F), such that the conveying elements (16) are guided along cyclic curves (Z) during the conveying movement over the drying surface (11, 12), wherein at least one of the conveying elements (16) is coupled via a transmission (30) to a coupling element (34), which is anchored in a stationary manner with respect to the conveying direction (F), such that the at least one conveying element (16) can be set into a rotary movement by movement of the at least one traction means (14), wherein the transmission is designed as a gear transmission, wherein the transmission comprises at least one gear wheel (32) which engages in the stationary coupling element (34), wherein the gear wheel (32) is connected to the support (20) in a rotationally fixed manner, and wherein the gear wheel (32) is attached to the traction means (14) and is arranged in a horizontal plane.

2. Device (10) according to claim 1, **characterized in that** the at least one support (20) is arranged in a horizontal plane.

3. Device (10) according to claim 1, **characterized in that** the coupling element (34) comprises a chain or toothed rail or toothed rack extending, at least in portions, longitudinally in the conveying direction (F).

4. Device (10) according to claim 3, **characterized in that**
the coupling element (34), in particular the chain or toothed rail or toothed rack, is fixed in space, in particular with respect to the at least one drying surface (11, 12).

5. Compact system (50) for drying, in particular biomass, **characterized by** at least one device (10) according to any of the preceding claims.

6. Compact system (50) according to claim 5, **characterized by** at least two devices (10), preferably at least three devices (10), particularly preferably four devices (10), according to any of claims 1 to 4, wherein the devices (10) are arranged one above the other in the vertical direction.

7. Compact system (50) according to claim 6, **characterized in that** the devices (10) are arranged one above the other in the vertical direction such that the drying surfaces (11, 12) of the devices (10), which surfaces are arranged one above the other, overlap at least in portions.

## Revendications

1. Dispositif (10) pour le séchage, en particulier pour le séchage de biomasse, comportant au moins une surface de séchage (11, 12) sur laquelle de la matière, en particulier de la biomasse, peut être épandue à plat pour le séchage, dans lequel des éléments de transport (16) déplacés ou pouvant être déplacés sont prévus pour l'épandage et/ou le transport de la matière, en particulier de la biomasse, par au moins un moyen de traction (14), lesquels éléments de transport sont fixés au moins indirectement par l'intermédiaire d'au moins un élément formant support (20) à l'au moins un moyen de traction (14) et peuvent être déplacés par celui-ci dans une direction de transport, dans lequel les éléments de transport (16) sont montés rotatifs de manière excentrée autour d'au moins un axe de rotation (A) s'étendant perpendiculairement à la direction de transport (F) pour le mélange de la matière sur l'au moins une surface de séchage (11, 12) par rapport à l'au moins un moyen de traction (14), de telle sorte que les éléments de transport (16) sont guidés le long de courbes cycliques (Z) lors du déplacement de transport sur la surface de séchage (11, 12), dans lequel au moins l'un des éléments de transport (16) est accouplé par l'intermédiaire d'un engrenage (30) à un élément d'accouplement (34) ancré de manière stationnaire par rapport à la direction de transport (F) de telle sorte que l'au moins un élément de transport (16) peut être déplacé en rotation par le déplacement de l'au moins un moyen de traction (14), dans lequel l'engrenage est réalisé sous forme de transmission par engrenage, dans lequel l'engrenage comprend au moins une roue dentée (32) qui vient en prise dans l'élément d'accouplement (34) stationnaire, dans lequel la roue dentée (32) est reliée de manière solidaire en rotation à l'élément formant support (20), et dans lequel la roue dentée (32) est fixée au moyen de traction (14) et est disposée dans un plan horizontal.

2. Dispositif (10) selon la revendication 1, **caractérisé en ce que** l'au moins un élément formant support (20) est disposé dans un plan horizontal.

3. Dispositif (10) selon la revendication 1, **caractérisé en ce que** l'élément d'accouplement (34) comprend une chaîne ou un disque denté ou une crémaillère s'étendant au moins dans certaines sections longitudinalement dans la direction de transport (F).

4. Dispositif (10) selon la revendication 3, **caractérisé en ce**
**que** l'élément d'accouplement (34), en particulier la chaîne ou le disque denté ou la crémaillère, est disposé de manière fixe dans l'espace, en particulier par rapport à l'au moins une surface de séchage (11, 12).

5. Installation compacte (50) pour le séchage, en particulier de biomasse, **caractérisée par** au moins un dispositif (10) selon l'une des revendications précédentes.

6. Installation compacte (50) selon la revendication 5, **caractérisée par** au moins deux dispositifs (10), de préférence au moins trois dispositifs (10), de manière particulièrement préférée quatre dispositifs (10) selon l'une des revendications 1 à 4, dans laquelle les dispositifs (10) sont disposés les uns au-dessus des autres dans la direction verticale.

7. Installation compacte (50) selon la revendication 6,
**caractérisée en ce que** les dispositifs (10) sont disposés les uns au-dessus des autres dans la direction verticale de telle sorte que les surfaces de séchage (11, 12) des dispositifs (10) disposées les unes au-dessus des autres se superposent au moins dans certaines sections.
